Europäisches Patentamt

European Patent Office

Office européen des brevets

(11) Veröffentlichungsnummer: **0 276 368**
B1

(12) **EUROPÄISCHE PATENTSCHRIFT**

(45) Veröffentlichungstag der Patentschrift:
19.09.90

(51) Int. Cl.⁵: **G01K 1/02**, G08C 15/00

(21) Anmeldenummer: 87114239.4

(22) Anmeldetag: 30.09.87

(54) Einrichtung zur Fernmessung der Temperatur.

(30) Priorität: 16.01.87 DE 3701082

(43) Veröffentlichungstag der Anmeldung:
03.08.88 Patentblatt 88/31

(45) Bekanntmachung des Hinweises auf die Patenterteilung:
19.09.90 Patentblatt 90/38

(84) Benannte Vertragsstaaten:
CH DE FR GB IT LI NL

(56) Entgegenhaltungen:
EP-A- 0 193 950
DE-A- 2 701 039
DE-A- 2 707 420
DE-A- 3 128 706
GB-A- 1 101 122
US-A- 3 821 559

(73) Patentinhaber: Heraeus Sensor GmbH,
Heraeusstrasse 12-14, D-6450 Hanau am Main(DE)

(72) Erfinder: Ziegler, Horst, Prof. Dr., Steinhauser Weg 13,
D-4790 Paderborn(DE)
Erfinder: Hoentzsch, Christof, Dr., August Potthast
Weg 13, D-4790 Paderborn(DE)

(74) Vertreter: Heinen, Gerhard, Dr., Heraeus Holding GmbH
Heraeusstrasse 12-14, D-6450 Hanau am Main(DE)

## Beschreibung

Die Erfindung betrifft eine Einrichtung zur Fernmessung der Temperatur oder einer anderen physikalischen Größe an einer Mehrzahl von Meßstellen gemäß dem Oberbegriff des Anspruches 1.

Eine derartige Einrichtung ist in der DE-PS 3 128 706 beschrieben. Bei ihr sind die verschiedenen Fühleinheiten, die den einzelnen Meßstellen zugeordnet sind, an eine gemeinsame Datenschiene angeschlossen und senden jeweils unter grösserem Abstand aufeinanderfolgende Impulse aus, deren Abstand dem momentanen Wert der zu erfassenden Größe bei der Meßstelle entspricht. Die von den verschiedenen Fühleinheiten bereitgestellten Impulse sind ineinander verschachtelt, was dadurch erreicht wird, daß man die einzelnen Fühleinheiten über einen für sie spezifisch eingestellten Verzögerungskreis mit einem von der zentralen Auswerteeinheit bereitgestellten Startimpuls beaufschlagt.

Für manche Anwendungsfälle ist es wünschenswert, wenn von der Fühleinheit zusätzliche Daten zur Auswerteeinheit überstellt werden können, z.B. Daten zur Identifizierung der Arbeitskennlinie des in einer betrachteten Fühleinheit enthaltenen Fühlers, Daten, welche eine Kenngröße der betrachteten Meßstelle charakterisieren usw. Diese Daten können zwar im Prinzip auch in der zentralen Auswerteeinheit abgelegt werden, in diesem Falle ist es jedoch beim Aufbau des gesamten Meßsystems und später auch beim Austausch von Fühleinheiten notwendig. die Auswerteeinheit entsprechend zu programmieren. wäre es dagegen möglich, die Fühleinheiten näher charakterisierende Daten direkt aus der Fühleinheit abrufen zu können, könnte diese zusätzliche und auch eine weitere Fehlermöglichkeit darstellende Programmierung der Auswerteeinheit entfallen.

Die Modulation von Meßsignalen zur Übertragung von zusätzlichen Informationen ist bekannt. So beschreibt die DE-A 2 707 420 ein Verfahren zur Übertragung mehrerer Parameter auf parallel betriebenen Nachrichtenkanälen. Pro Kanal werden zwei Meßgrößen in der Weise übertragen, daß die Modulation im betreffenden Kanal zwei periodisch aufeinanderfolgende Zustände annimmt, deren Längen den Beträgen der Meßgrößen analog sind. Als Beispiel wird ein Oszillator genannt, dessen Ausgangssignal eine Impulsfolge rechteckigförmiger Signale ist, die eine vom Feuchtewiderstand abhängige Oberlänge $t_f$ und eine vom barometergesteuerten Widerstand gesteuerte Unterlänge $t_p$ aufweist.

Weiterhin ist aus der DE-A 2 701 039 eine Vorrichtung bekannt, die ein codiertes Signal liefert, dessen Codesequenz eine erste abgefragte Umweltbedingung und dessen Frequenz eine zweite abgefragte Umweltbedingung angibt. Im Ausführungsbeispiel wird dazu eine Tiefendruck- und Tiefentemperaturmessung in einem Ölbohrloch beschrieben. Der Druck wird dabei durch eine Sequenz von Pulsen dargestellt, welche aber nur zwei verschiedene Pulshöhen als digitale Ziffern annehmen können; die Temperatur entspricht der Zeitdauer der Pulse.

Zur Auswertung gelangen dabei stets mehrere Signale aus einer einzigen Meßstelle.

Durch die vorliegende Erfindung soll daher eine Einrichtung zur Fernmessung der Temperatur oder einer anderen physikalischen Größe an einer Mehrzahl von Meßstellen gemäß dem Oberbegriff des Anspruches 1 so weitergebildet werden, daß unter Beibehaltung einer einfachen Zwei-Leiter-Datenschiene zusätzlich zum eigentlichen Meßsignal weitere Informationen von den Fühleinheiten zur Auswerteeinheit übertragen werden können.

Diese Aufgabe ist erfindungsgemäß gelöst durch eine Einrichtung gemäß Anspruch 1.

Bei der erfindungsgemäßen Fernmeßeinrichtung hat man insgesamt zwei oder drei ineinandergeschachtelte Datenübertragungskanäle: Zunächst den Haupt-Datenübertragungskanal für die Meßdaten, die aus einer abstandsmodulierten Impulsfolge bestehen; dann einen zweiten Datenübertragungskanal mit in der Praxis kleinerer Auflösung, der dadurch erhalten wird, daß man die Breite der zur Übertragung der Hauptinformation abstandsmodulierten Impulse zusätzlich moduliert; schließlich einen dritten Datenübertragungskanal, der dadurch erhalten wird, daß man zusätzlich die Amplitude der zur Übertragung der Meßdaten abstandsmodulierten Impulse moduliert.

Durch diese zusätzlichen Modulationsmöglichkeiten wird die Schnelligkeit, mit der die Hauptinformation (momentane Temperatur bzw. momentaner Wert einer anderen physikalischen Größe bei der betrachteten Fühleinheit) von der Fühleinheit zur Auswerteeinheit übertragen wird, nicht beeinträchtigt.

Über den zweiten Datenkanal können sekundäre Informationen gesandt werden wie z.B. Angagen über die Kennlinie des in der betrachteten Fühleinheit eingesetzten Fühlers (bei im wesentlichen linearer Kennlinie z.B. die Steigung und das Nullsignal oder zwei Punkte der Kennlinie, wodurch fertigungsbedingten Schwankungen der Kennlinie automatisch Rech nung getragen erden kann) oder auch Angaben über Einbau-Bedingungen des FÜhlers an der Meßstelle oder Angaben über die momentanen Umgebungsbedingungen, unter denen der Fühler arbeitet (bei Temperaturmessung in einem chemischen Reaktor z.B. Information darüber, ob der Reaktor gerade geheizt oder gekühlt wird).

Da die Auswerteeinheit sowieso Schaltkreise enthalten muß, welche den zeitlichen Abstand von Impulsen ermitteln können, und da Schaltkreise zur Bestimmung von Impulsbreiten sehr ähnlichen Aufbau aufweisen wie solche zur Bestimmung des Impulsabstandes, läßt sich eine erfindungsgemäße Fernmeßeinrichtung mit zwei Datenübertragungskanälen mit geringem zusätzlichem baulichem Aufwand realisieren.

Wünscht man den dritten Datenübertragungskanal, so müssen zusätzlich Schaltkreise zur Amplitudenmodulation in den Fühleinheiten und Schaltkreise zur Amplitudendiskrimination in der Auswerteeinheit vorgesehen werden. Derartige Schaltkreise sind aber nicht teuer, und der insgesamt erhaltene Vorteil einer erhöhten Flexibilität der Datenübertragung bei unveränderten Leitungs-Installationskosten macht diese Mehrkosten mehr als wett.

Vorteilhafte Weiterbildungen der Erfingung sind in Unteransprüchen angegeben.

Die Weiterbildung der Erfindung gemäß Anspruch 2 stellt eine besonders einfache Möglichkeit der Erzeugung von Zusatzinformation für eine betrachtete Fühleinheit dar. In der Praxis kann eine Mehrzahl unterschiedlicher Speicherkreise als steckbare Element vorgesehen werden, von denen jeweils ein zur betrachteten Montagestelle passender beim Anbringen der Fühleinheit vom Montagepersonal in einen Stecksockel eingesetzt wird. Bei entsprechender Kennzeichnung der verschiedenen Speicherkreise braucht das Montagepersonal somit keine Kenntnisse bezüglich der Programmie rung der Auswerteeinheit zu haben.

Mit der Weiterbildung der Erfindung gemäß Anspruch 3 wird eine zweite Meßgröße zusätzlich zur Haupt-Meßgröße über den zusätzlich gewonnenen Datenübertragungskanal zur Auswerteeinheit übermittelt. Beispiele hierfür sind bei Annahme der Temperatur an der Meßstelle als Haupt-Meßgröße: Die Dichte oder der Druck gasförmiger Reaktionspartner in einem chemischen Reaktor, in dem die Temperatur gemessen wird, der Feuchtigkeitsgehalt des Reaktionsgemisches in diesem Reaktor, die Menge von flüssigen oder festen Reaktionsprodukten, die sich im Reaktor gebildet haben und periodisch abgezogen werden müssen, die außerhalb des Reaktors in der Fabrikhalle herrschende Temperatur, Angaben über den Arbeitszustand einer Heizeinrichtung und/oder Kühleinrichtung des Reaktors usw.

Die Weiterbildung der Erfindung gemäß Anspruch 5 ist im Hinblick auf ein einfaches Abspeichern der verschiedenen von den Fühleinheiten zur Auswerteeinheit übertragenen Informationen von Vorteil: Ein Satz von Meßdaten und zusätzlich übertragenen Informationen kann als ein Wort behandelt werden.

Mit der Weiterbildung der Erfindung gemäß Anspruch 6 wird ein besonders einfacher Aufbau der Auswerteeinheit erhalten, da ein- und derselbe Zähler sowohl zur Abstandsbestimmung aufeinanderfolgender Impulse als auch zur Bestimmung der Breite dieser Impulse verwendet wird.

Wendet man das Prinzip der zusätzlichen Modulation von über die Datenschiene übermittelten Impulsen auf diejenigen Impulse an, welche von der Auswerteeinheit zu den einzelnen Fühleinheiten gesandt werden, um deren Arbeiten zu steuern, so kann man mit den zusätzlich breiten- oder amplitudenmodulierten Impulsen adressierbare Umschalter ansteuern, über welche Unter-Datenschienen an eine Haupt-Datenschiene angekoppelt bzw. von dieser getrennt werden können.

Damit kann man eine große Anzahl von Fühleinheiten an eine einzige Auswerteeinheit anschließen, ohne daß bei größeren Änderungen der zu erfassenden Größe die Gefahr eine Überlappung der Meßimpulse besteht.

Man kann so auch unter Verwendung einer verhältnismäßig kleinen Gesamtanzahl unterschiedlicher Phasenmodulations- oder Verzögerungskreise für die einzelnen Fühleinheiten Fernmeßeinrichtungen mit einer sehr großen Anzahl von Fühleinheiten realisieren.

Dabei ist mit der Weiterbildung der Erfindung gemäß Anspruch 8 gewährleistet, daß die Steuerimpulse schon aus sich selbst von Meßimpulsen unterscheidbar sind. An und für sich kann die Auswerteeinheit die Steuerimpulse von Meßimpulsen schon dadurch unterscheiden, daß sie den Zeitpunkt ihrer Erzeugung ja kennt. Mit der Weiterbildung der Erfindung gemäß Anspruch 8 wird aber eine noch höhere Sicherheit der Unterscheidung auch unter Berücksichtigung anlagenspezifischer, installationsbedingter Laufzeiteffekte erhalten.

Die erfindungsgemäße Fernmeßeinrichtung läßt sich im Prinzip sowohl mit Spannungsimpulsen als auch mit Stromimpulsen realisieren. Mit der Weiterbildung der Erfindung gemäß Anspruch 9 wird aber erreicht, daß die Energieversorgung für die verschiedenen Fühleinheiten besonders gut aus der Datenschiene selbst bewerkstelligt werden kann, auch dann, wenn die über die Datenschiene überstellten Meßimpulse unter geringem Abstand aufeinander folgen.

Die Weiterbildung der Erfindung gemäß Anspruch 10 ist im Hinblick auf die einfache Unterscheidung von Steuerimpulsen, die von der Auswerteinheit an die Schienen-Umschalter überstellt werden, und Meßimpulsen, die von den Fühleinheiten zur Auswerteeinheit gesandt werden, von Vorteil.

Nachstehend wird die Erfindung anhand von Ausführungsbeispielen unter Bezugnahme auf die Zeichnung näher erläutert. In dieser zeigen:

Figur 1: ein schematisches Blockschaltbild einer Temperatur-Fernmessungsanlage;

Figur 2a und 2b: einen Ausschnitt aus dem zeitlichen Verlauf der Spannung bzw. des Stromes auf einer Datenschiene der Fernmessungsanlage nach Figur 1;

Figur 3: einen zeitlich weiter gespreizten Ausschnitt des Stromverlaufs nach Figur 2b;

Figur 4: ein Blockschaltbild einer Fühleinheit der Fernmessungsanlage nach Figur 1;

Figur 5: ein Blockschaltbild eines adressierbaren Schienen-Umschalters der Fernmessungsanlage nach Figur 1;

Figur 6: ein Blockschaltbild einer Auswerteeinheit der Fernmessungsanlage nach Figur 1;

Figur 7: das Schaltbild eines Schaltkreises zum Bestimmen des Abstandes und der Breite der über die Datenschiene der Fernmessungsanlage nach Figur 1 überstellten Impulse und zum Zusammenstellen der entsprechenden Meßwerte zu einem Datenwort;

Figur 8: eine zu Figur 3 ähnliche Signalverlaufs-Darstellung bei einer abgewandelten Temperatur-Fernmessungsanlage; und

Figur 9: das Schaltbild eines Amplituden-Diskriminatorkreises der zusätzlich in der Diskriminatoreinheit nach Figur 7 vorgesehen werden kann.

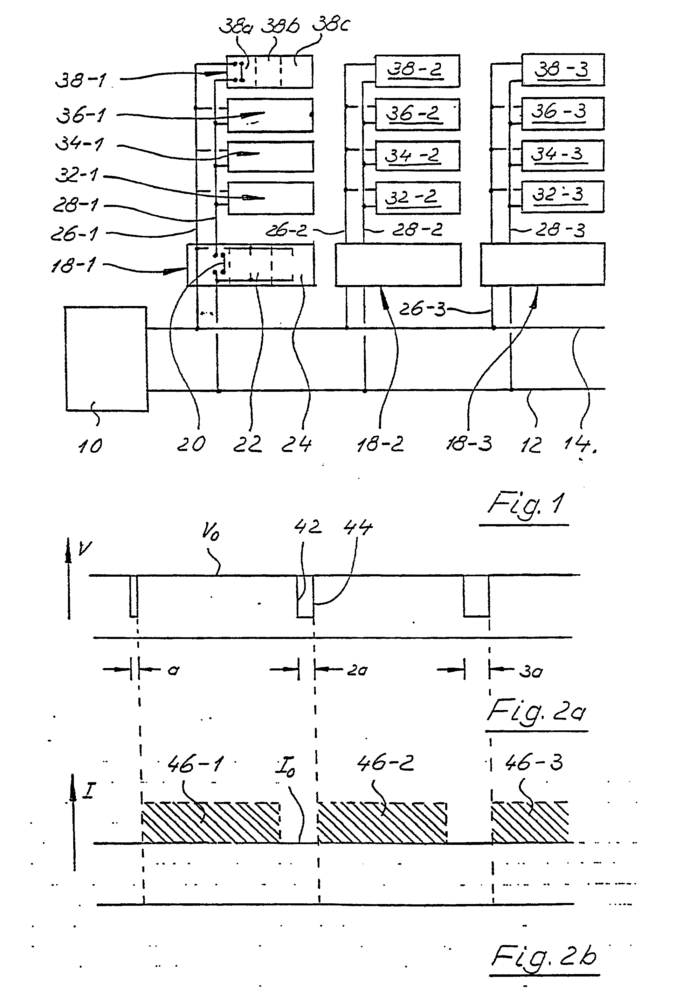

Figur 1 zeigt schematisch eine Temperatur-Fernmessungsanlage, die der besseren Übersichtlichkeit halber in Verbindung mit nur zwölf Meßstellen erläutert wird. In der Praxis kann eine derartige Fernmeßanlage ohne weiteres tausend und mehr Meßstellen umfassen.

An eine zentrale Auswerteeinheit 10 für alle Meßstellen sind zwei Leiter 12, 14 angeschlossen. Die Leiter 12, 14 bilden eine Haupt-Datenschiene. An diese sind beim betrachteten Ausführungsbeispiel drei adressierbare Schienenumschalter 18-1, 18-2 und 18-3 angeschlossen. Diese haben jeweils eine steuerbare Brücke 20, welche eine Verbindung zum Leiter 12 herstellen oder unterbrechen kann.

Zur Steuerung der Brücken 20 dient jeweils eine Steuereinheit 22, die ihre Steuersignale von den Leitern 12, 14 abgreift. Auch eine Netzeinheit 24, die die verschiedenen Bauelemente eines Schienenumschalters 18 mit Energie versorgt, ist an die Leiter 12, 14 angeschlossen.

An einen Schienenumschalters 18 sind jeweils Leiter 26, 28 angeschlossen. Diese bilden zusammen eine Unter-Datenschiene, die je nach der Stellung der Brücke 20 an die durch die Leiter 12, 14 gebildete Haupt-Datenschiene geschaltet oder von dieser getrennt werden kann. An die durch die Leiter 26, 28 gebildete Unter-Datenschiene sind Fühleinheiten 32-38 geschaltet, welche jeweils den durch die Leiter 26, 28 geführten Grundstrom modulieren können (Meßimpulse) und auf bestimmte, über diese Leiter zugeführte, von der Auswerteeinheit 10 erzeugte Spannungsimpulse ansprechen (Steuerimpulse). Der Aufbau der Fühleinheiten 32-38 wird weiter unten noch genauer erläutert. Hier mag zunächst genügen, daß jede der Fühleinheiten 32-38 einen Temperaturfühler 38c, einen durch dessen Ausgangssignal frequenzgesteuerten Impulsgenerator 38b und eine durch letzteren betätigte Schaltstufe 38a enthält, sodaß die Fühleinheit insgesamt aufeinanderfolgende Impulse bereitstellt, deren Abstand ein Maß für die Temperatur an der Fühleinheit ist. Typische hierfür geeignete Temperaturfühler sind auf Temperaturgang geschnittene Quarze mit nachgeschalteten Frequenzteilerkreisen.

Für die Zwecke der vorliegenden Beschreibung sei angenommen, daß die Fühleinheiten jeweils die Temperatur in einem zugeordneten chemischen Reaktor (nicht gezeigt) überwachen, in welchem gasförmige Substanzen umgesetzt werden.

Figur 2a zeigt schematisch den zeitlichen Verlauf der Spannung auf den Leitern 12, 14. Die Auswerteeinheit 10 unterhält auf diesen Leitern eine Grundspannung $V_0$. Dieser werden von der Auswerteeinheit negative Steuerimpulse 42 überlagert, um das Arbeiten der Schienenumschalter 18 und der Fühleinheiten 32-38 zu steuern.

Die negativen Steuerimpulse 42 dienen zum einen als Adressierimpulse, durch welche jeweils einer der Schienenumschalter 18 in den Arbeitszustand mit geschlossener Brücke 20 gebracht wird, während die übrigen Schienenumschalter im offenen Zustand (R: :ustand) verbleiben. Die Adressierung eines be      nten der Schienenumschalter 18 zum Schließe:      Jlgt über die Breite des Steuerimpulses 42. ⌐aim hier betrachteten Ausführungsbeispiel sei angenommen, daß der Schienenumschalter 18-1 bei einer Impulsbreite a schließt, der Schienenumschalter 18-2 bei einer Impulsbreite 2a und der Schienenumschalter 18-3 bei einer Impulsbreite von 3a.

Über die ansteigende hintere Flanke 44 der Steuerimpulse 42 startet die Auswerteeinheit 10 ferner jeweils das Arbeiten der verschiedenen Fühleinheiten 32-38 in derjenigen Unter-Datenschiene, welche durch den zugeordneten Steuerimpuls adressiert und so an die Haupt-Datenschiene angeschlossen wurde. Nun beginnen die verschiedenen an die Unter-Datenschiene angeschlossenen Fühleinheiten 32-38 den Grundstrom $I_0$ zu modulieren, welchen die Auswerteeinheit 10 auf den Leitern 12, 14 einstellt (vgl. Figur 2b), indem sie auf diesen aufeinanderfolgende Stromimpulse (schematische bei 46 angedeutet) aufsetzen, wobei der Abstand aufeinanderfolgender Stromimpulse, die eine Fühleinheit erzeugt, ein Maß für die bei dieser Fühleinheit herrschende Temperatur ist.

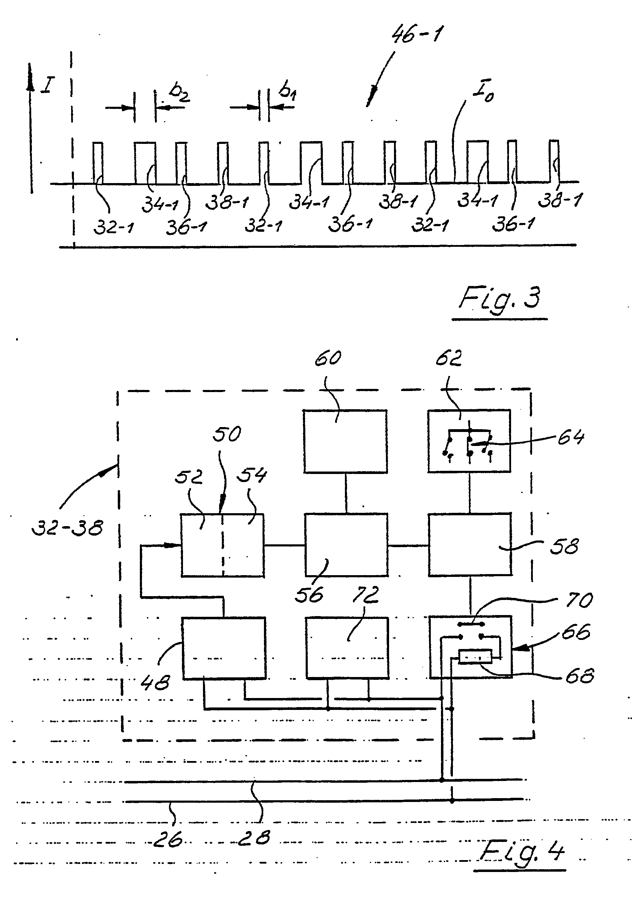

Typischerweise ist der Temperaturgang auf Frequenzbasis arbeitender Temperaturfühler verhältnismäßig klein, so daß man dann, wenn man die Auswertung der Impulslage nicht mit sehr hoher Auflösung vornehmen will, unter grösserem Abstand aufeinanderfolgender der Impulse auswerten muß. Gemäß der in der DE-PS 31 28 706 beschriebenen Erfindung erfolgt dies dadurch, daß man dem eigentlichen Temperaturfühler einen Frequenzteiler nachschaltet und nur im Abstand von beispielsweise einer halben Sekunde aufeinanderfolgende der vom Fühler erzeugten Impulse bezüglich der Phasenlage auswertet. Diejenige Zeit, innerhalb welcher eine bestimmte der Fühleinheiten 32-38 auf der auf Strombasis aufgebauten Datenschiene keine Impulse bereitstellt, wird dazu benützt, die Impulse anderer Fühleinheiten auf die Datenschiene zu geben, so daß die Meßimpulse der verschiedenen Fühleinheiten ineinandergeschachtelt sind, wie aus Figur 3 ersichtlich.

Aus Figur 3 ist ebenfalls ersichtlich, daß bei der hier beschriebenen Temperatur-Fernmeßanlage die Meßimpulse der verschiedenen Fühleinheiten unterschiedliche Breite haben. So erzeugen beim hier betrachteten Ausführungsbeispiel die Fühler 32-1, 36-1 und 38-1 jeweils positive Stromimpulse mit einer Breite $b_1$, während der Fühler 34-1 positive Stromimpulse der Breite $b_2$ erzeugt. Beim gerade beschriebenen Ausführungsbeispiel soll eine Impulsbreite $b_1$ anzeigen, daß eine Heizeinrichtung (nicht gezeigt) desenigen Reaktors, der der betrachteten Fühleinheit zugeordnet ist, eingeschaltet ist; eine Impulsbreite $b_2$ soll dagegen anzeigen, daß die fragliche Heizeinrichtung abgestellt ist. Weitere unterschiedliche Impulsbreiten können zur Codierung des Arbeitszustandes einer Kühleinrichtung der Reaktors dienen.

Entsprechend dieser in der Impulsbreite der von einer Fühleinheit erzeugten Meßimpulse steckenden Zusatzinformation kann dann die Steuerung der Temperatur oder einer anderen physikalischen Größe im Reaktor zielstrebiger erfolgen.

Aus der bisher gegebenen Beschreibung ist ersichtlich, daß die Leiter 12, 14 eine Haupt-Datenschiene bilden, an welche wahlweise eine von im Ausführungsbeispiel drei Unter-Datenschienen angeschlossen werden kann. Die Auswerteeinheit 10 erhält von den Fühleinheiten 32-38 mit hoher Auflösung eine Hauptinformation (bezüglich der bei der Fühleinheit herrschenden Temperatur, dargestellt durch Impulsabstandsmodulierung) sowie eine mit geringer Auflösung erfaßte Zusatzinformation (z.B. Fühlerkennlinie oder Arbeitszustand einer Heiz- oder Kühleinrichtung an der Meßstelle, dargestellt durch zusätzliche Modulation der Impulsbreite). Die entsprechenden Impulspakete einer Unter-Datenschiene sind in Figur 2b insgesamt mit 46 bezeichnet.

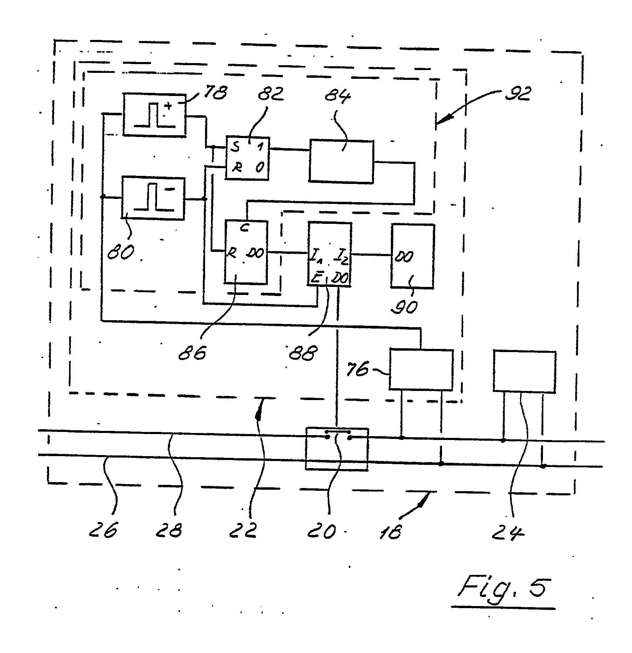

Figur 4 zeigt Einzelheiten aus dem Aufbau einer der Fühleinheiten 32-38. Diese Einheiten weisen jeweils einen in die Datenschiene der Unter-Datenschiene geschalteten Impulsdetektor 48 auf, der negative Spannungsimpulse auf den Leitern 26, 28 ausgangsseitig als positive Spannungsimpulse weitergibt. Diese Spannungsimpulse dienen zum Starten eines Temperaturfühlers 50, der aus einem auf Temperaturgang seiner Schwingungsfrequenz geschnittenen Schwingquarz 52 und einem nachgeschalteten Frequenzteiler 54 besteht. Die Ausgangsfrequenz des Frequenzteilers 54 beträgt typischerweise 4 Hz. Das Ausgangssignal des Temperaturfühlers 50, welches aus einer Abfolge von Impulsen vorgegebener Breite und temperaturabhängigen Abstandes besteht, wird über einen einstellbaren Verzögerungskreis 56 auf einen Impulsbreiten-Modulator 58 gegeben. Das Ausmaß der vom Verzögerungskreis 56 bewerkstelligten Signalverzögerung ist durch einen Verzögerungs-Einstellkreis 60 vorgegeben.

Der Breitenmodulator 58 modifiziert die Breite der vom Temperaturfühler 50 abgegebenen Impulse bei Aufrechterhaltung ihrer vorderen Impulsflanke in Abhängigkeit von dem an seiner Steuerklemme anstehenden Signal. Diese Signal wird von einem Geber 62 bereitgestellt, dessen Ausgangssignal einer zusätzlich von der betrachteten Fühleinheit zur Auswerteeinheit zu übertragenden Information entspricht.

Der Geber 62 kann z.B. ein Festwertspeicher sein, der ein der Kennlinie des Temperaturfühlers 50 zugeordnetes, voreingestelltes Signal abgibt. Dieses Signal kann seinerseits mehrere Teilinformationen umfassen, z.B. Nullpunktsverschiebung, Steigung und Krümmung der Kennlinie oder einige charakteristische Kennlinienpunkte.

Der Geber 62 kann bei Temperaturmessung in einem chemischen Reaktor auch ein der eingestellten Leistung der Reaktorheizung oder Reaktorkühlung zugeordnetes Signal oder ein einer anderen sekundären Meßgröße zugeordnetes Signal erzeugen.

Der Geber 62 kann auch einen analogen oder digitalen Fühler umfassen oder anstelle eines Halbleiter-Festwertspeichers (ROM) eine Schalterbank 64 oder einen einfachen Schalter aufweisen, wobei der Breitenmodulator 58 auf das Ausgangssignal des Gebers 62 angepaßt ist, z.B. bei Verwendung eines ein analoges Spannungssignal abgebenden Fühlers eine spannungsgesteuerte monostabile Kippstufe aufweist, die durch die vom Verzögerungskreis 56 abgegebenen Impulse angestoßen wird.

Durch die vom Breitenmodulator 58 bezüglich der Impulsbreite modifizierten Ausgangssignale des Temperaturfühlers 50 wird ein ebenfalls an die Unter-Datenschiene geschalteter Strom-Modulationskreis 66 angesteuert, welcher z.B. aus einem Widerstand 68 und einer hierzu in Reihe geschalteten Brücke 70 bestehen kann. Die Brücke 70 ist normalerweise offen und wird durch einen auf den Modulationskreis 66 gegebenen Aktivierungsimpuls geschlossen, was zu einem positiven Stromimpuls auf der Unter-Datenschiene und damit auch in der Haupt-Datenschiene führt.

Ein Netzkreis 72 dient zum Ableiten der Energieversorgung für die verschiedenen Bauelemente der Fühleinheit vom durch die Auswerteeinheit 10 aufrechterhaltenen Grundstrom $I_0$.

Figur 5 zeigt Einzelheiten eines Schienenumschalters.

Jeder Schienenumschalter 18 hat einen Impulsdetektor 76, der ähnlich aufgebaut ist wie die Impulsdetektoren 48 der Fühleinheiten, auch auf negative Spannungsimpulse anspricht und diese in positive Spannungsimpulse gleicher LÄnge umsetzt. Mit den letzteren ist ein auf ansteigende Flanken triggernder Flankendetektor 78 sowie ein auf abfallende Flanken triggernder Flankendetektor 80 beaufschlagt. Deren Ausgangssignale werden auf die Setz- bzw. Rückstellklemme einer bistabilen Kippschaltung 82 gegeben. Deren "1"-Ausgang dient zum Aktivieren eines freilaufenden Frequenzgenerators 84. Die am Ausgang des letzteren erhaltenen Impulse gelangen auf die Zählklemme C eines Zählers 86, dessen Rückstellklemme R mit dem Ausgangssignal des Flankendetektors 78 versorgt wird.

Durch das Ausgangssignal des auf abfallende Flanken triggernden Flankendetektors 80 wird nicht nur die bistabile Kippschaltung 82 zurückgesetzt, womit die Abgabe von Impulsen durch den Frequenzgenerator 84 beendet wird, es wird zugleich auch ein Komparator 88 angestossen, der eingangsseitig mit dem Ausgangssignal des Zählers 86 sowie dem Ausgangssignal eines Adress-Einstellkreises 90 beaufschlagt ist.

Stimmen die Ausgangssignale von Zähler 86 und Einstellkreis 90 überein, so erhält man am Ausgang des Komparators 88 ein Steuersignal, durch welches die Brücke 20 geschlossen wird. In diesem Falle werden dann die zugehörigen Leiter 26, 28 als Unter-Datenschiene an die Leiter 12, 14 gelegt.

Der Schienenumschalter 18 enthält ferner den schon weiter oben angesprochenen Netzkreis 24, der die zum Betreiben der verschiedenen Bauelemente notwendige Energie aus dem Grundstrom $I_0$ ableitet.

In Figur 5 sind die Bauelemente 78-86, die zusammen einen Impulsbreiten-Diskriminator darstellen, durch einen gestrichelte Linie 92 eingefasst.

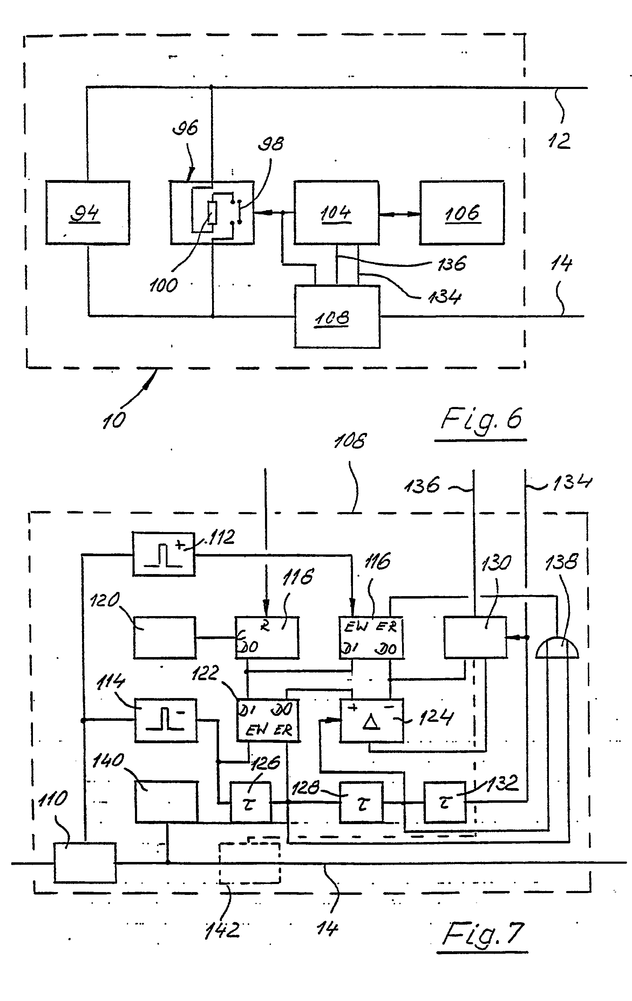

Wie aus Figur 6 ersichtlich, enthält die Auswerteeinheit 10 zunächst eine Spannungsquelle 94 zur Einstellung des Grundstromes $I_0$ auf der Haupt-Datenschiene 12, 14 und der gerade angeschlossenen der Unter-Datenschienen. Über die Klemmen der Spannungsquelle 94 ist ein Steuerimpuls-Generator 96 geschaltet. Dieser kann einen Widerstand 100 und eine normalerweise offene Schaltbrücke 98 aufweisen, wobei letztere gemäß dem an der Steuerklemme des Steuerimpuls-Generators 96 anliegenden Signal geschlossen wird, um auf die Grundspannung $V_0$ einen negativen Spannungsimpuls aufzusetzen.

Der Innenwiderstand der Spannungsquelle 94 ist klein verglichen mit dem Kurzschluß-Widerstand 68 der Fühleinheiten und groß verglichen mit dem Kurzschluß-Widerstand 100, sodaß das Schließen der Brücke 70 zu einem Stromimpuls, das Schließen der Brücke 98 zu einem Spannungsimpuls auf der Haupt-Datenschiene 12, 14 führt.

Die Steuersignale für den Steuerimpuls-Generator 96 werden von einem frei programmierbaren Rechner 104 bereitgestellt, der mit einem Massenspeicher 106 zusammenarbeitet und mit einem Programm geladen ist, welches den zeitlichen Ablauf der Umschaltung auf die verschiedenen Unter-Datenschienen, des Abrufs der Meßimpulspakete 46 sowie deren Auswertung und Abspeicherung steuert. So legt der Rechner 104 z.B. an den Steuerimpulsgenerator 96 Impulse mit der Länge a, 2a und 3a, um die verschiedenen Unter-Datenschienen in beliebiger Reihenfolge an die Haupt-Datenschiene anzuschliessen. Die freie Programmierbarkeit der Adressierung der Schienenumschalter 18 ermöglicht es dabei, einige der Unter-Datenschienen, die von geringerem Interesse sind, insgesamt weniger oft abzufragen als andere der Unter-Datenschienen.

Durch die abfallende hintere Flanke eines vom Rechner 104 auf den Steuerimpuls-Generator 96 gegebenen Impulses wird auch eine Auswerteschaltung 108 gestartet, die in die Stromschleife aus Spannungsquelle 94, Haupt-Datenschiene und zugeschalteter Unter-Datenschiene eingefügt ist. Einzelheiten der Auswerteschaltung 108 werden nun unter Bezugnahme auf Figur 7 näher erläutert.

Die Auswerteschaltung 108 enthält einen in die Datenschiene eingefügten Impulsdetektor 110, der nur auf positive Stromimpulse anspricht und bei Vorliegen eines solchen an seinem Ausgang einen positiven Spannungsimpuls bereitstellt. Dieser gelangt auf die Eingänge eines auf positive Flanken triggernden Flankendetektors 112 sowie eines auf negative Flanken triggernden Flankendetektors 114.

Das Ausgangssignal des Flankendetektors 112 steuert die Schreib-Steuerklemme EW eines Schreib/Lesespeichers 116 an. Die Dateneingangsklemme DI des Schreib/Lesespeichers 116 ist mit dem Datenausgang DO eines Zählers 118 beaufschlagt, dessen Zählklemme C von einem freilaufenden Frequenzgenerator 120 laufend mit Zählimpulsen versorgt wird. Die Rückstellklemme des Zählers 118 ist mit dem vom Rechner 104 bereitgestellten Auswerte-Startsignal beaufschlagt.

Der Datenausgang des Zählers 118 ist ferner mit dem Dateneingang DI eines zweiten Schreib/Lesespeichers 122 verbunden. Dessen Schreib-Steuerklemme EW ist mit dem Signal am Ausgang des auf negative Flanken triggernden Flankendetektors 114 beaufschlagt.

Die Datenausgangsklemmen DO der beiden Schreib/Lesespeicher 116 und 122 sind mit den Eingängen eines Subtrahierkreises 124 verbunden. Zur Ansteuerung der Auslese-Steuerklemmen ER der beiden Schreib/Lesespeicher 116 und 122 dient das durch ein Verzögerungsglied 126 verzögerte Ausgangssignal des Flankendetektors 114. Das Ausgangssignal des Verzögerungsgliedes 126 wird durch ein weiteres Verzögerungsglied 128 nochmal verzögert und dient zum Aktivieren des Subtrahierkreises 124. Das Ausgangssignal des Subtrahierkreises 124 entspricht somit der Breite eines vom Impulsdetektor 110 festgestellten positiven Stromimpulses auf der Datenschiene, während der Inhalt des Schreib/Lesespeichers 116 der Lage der ansteigenden Flanke dieses Impulses entspricht. Diese beiden Informationen werden durch einen Kombinationskreis 130 zusammengesetzt, und zwar nicht arithmetisch sondern in Form einer Zeichenverkettung: Das Ausgangssignal des Schreib/Lesespeichers 116 wird in die höherwertigen Bits eines z.B. 16 Bit langen Datenwortes gesetzt, während das Ausgangssignal des Subtrahierkreises 124 auf die niederwertigen Bits dieses Wortes gelegt wird.

Die Aktivierung des Kombinationskreises 130 erfolgt durch ein weiteres durch das Verzögerungsglied 132 verzögerte Ausgangssignal des Verzögerungsgliedes 128. Das Ausgangssignal des Verzögerungsgliedes 132 wird zugleich über eine Leitung 134 auf den Rechner 104 gegeben, um anzuzeigen, daß ein weiteres Meßdatenwort zur Übernahme und Weiterverarbeitung bereitsteht. Dieses Wort wird vom Kombinationskreis 130 über eine Datenleitung 136 dem Rechner 104 überstellt.

Damit der Schreib/Lesespeicher 116 sowohl bei der Aktivie rung des Subtrahierkreises 124 als auch bei der Aktivierung des Kombinationskreises 130 seinen Inhalt bei seiner Datenausgangsklemme DO bereitstellt, wird er über ein ODER-Glied 138 mit dem Ausgangssignal sowohl des Verzögerungsgliedes 126 als auch des Verzögerungsgliedes 128 beaufschlagt.

Die Auswerteschaltung 108 hat wiederum einen Netzkreis 140 zur Ableitung der Versorgungsspannungen aus dem Grundstrom $I_0$.

Bei der in Figur 7 gezeigten Auswerteschaltung 108 wird durch Auslesen des Standes eines einzigen Zählers 118 zu verschiedenen Zeitpunkten sowohl die Lage eines Meßdatenimpulses als auch dessen Breite bestimmt. In Abwandlung dieses Ausführungsbeispieles könnte man den Zähler 118 nur zur Lagebestimmung eines Meßdatenimpulses verwenden und dessen Breite mit einem gesonderten Impulsbreitendiskriminator ermitteln, wie er bei 92 in Figur 5 wiedergegeben ist. Durch Einstellung der Arbeitsfrequenz des freilaufenden Frequenzgenerators 84 eines solchen Impulsbreitendiskriminators läßt sich dann die Auflösung bei der Bestimmung der Impulsbreite auch unterschiedlich von der zeitlichen Auflösung bei der Bestimmung der Impulslage wählen.

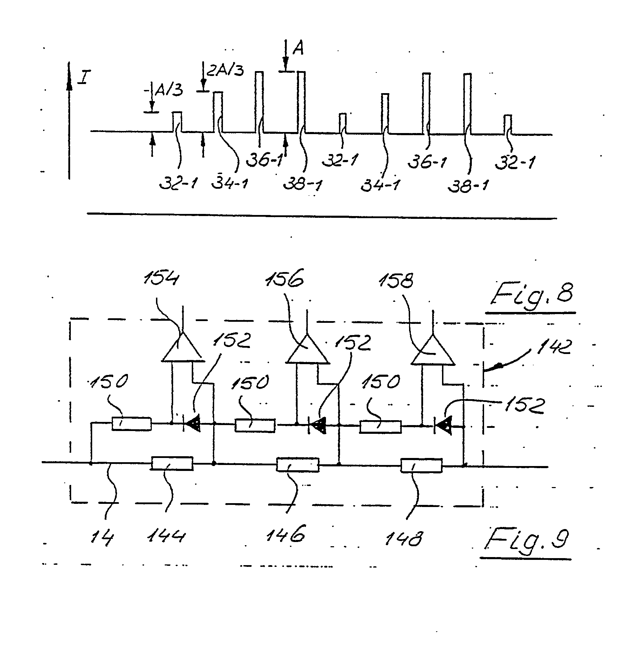

Bei dem vorstehend genauer beschriebenen Ausführungsbeispiel steckte die von einer Fühleinheit zur zentralen Auswerteeinheit zusätzlich zu übertragende Information in der Breite der abstandsmodulierten Impulse für die Hauptinformation (Temperatur). Gemäß Figur 8 kann man diese Zusatzinformation auch in einer Amplitudenmodulierung der abstandsmodulierten Impulse zur Übertragung der Hauptinformation stecken. Bei der in Figur 8 gezeigten Impulsabfolge übermitteln die Fühleinheiten 32-1 - 38-1 Zusatzinformationen, welche mit "1", "2" und "3" bezeichnet werden können, in Form von Impulsamplituden der Größe A/3, 2A/3 und A. Diese unterschiedlichen Zusatzinformationen können wieder für verschiedene Werte für die Kennlinie des eingesetzten Temperaturfühlers oder andere sekundäre Meßinformation stehen.

Figur 9 zeigt einen Amplitudendiskriminator 142, der zur Erkennung dreier unterschiedlicher Impulshöhen in der Auswerteschaltung 108 vorgesehen werden kann.

In den Leiter 14 sind drei Widerstände 144, 146, 148 geschaltet, deren Werte sich wie eins zu zwei zu drei verhalten. Über die Widerstände 144-148 ist jeweils eine Reihenschaltung aus jeweils einem Widerstand 150 und einer Zener-Diode 152 geschaltet. Die Spannungsabfälle an den Zener-Dioden 152 werden auf die Eingänge von Differenzverstärkern 154, 156, 158 gegeben, welche somit ein Ausgangssignal bereitstellen, wenn der Stromimpuls in Figur 8 angedeuteten Pegel A/3, 2A/3 bzw. A erreicht. Falls gewünscht, kann dem Amplitudendiskriminator 142 nach Figur 9 noch ein Kodiernetzwerk nachgeschaltet werden, welches das durch die Ausgangssignale an den Differenzverstärkern 154 bis 158 erhaltene Gesamtsignal in die Zahlen "1", "2" und "3" umsetzt.

Die Amplitudenmodulation der Meßdatenimpulse, wie sie in Figur 8 gezeigt ist, kann auch mit der Impulsbreitenmodulation nach Figur 3 kombiniert werden, wodurch man dann zwei zusätzliche Informationskanäle auf der Datenschiene eröffnet, über die dann mit niederer Auflösung zwei zusätzliche für die Meßung relevante Informationen von den Fühleinheiten 32-38 der jeweils adressierten Unter-Datenschiene zur Auswerteeinheit 10 überstellt werden können. Hierzu wird der Amplitudendiskriminator 142 so in Figur 7 eingefügt, wie dort gestrichelt angedeutet. Der Kombinationskreis 130 bildet dann aus dem Ausgangssignal des Amplitudendiskriminators 142 einen weiteren Teil des über die Datenleitung 136 an den Rechner 104 abgegebenen Meßdatenwortes.

Falls gewünscht, kann man bei der Auswerteschaltung nach Figur 7 auch die der Bestimmung der Impulsbreite dienenden Schaltkreise weglassen und nur einen zusätzlichen Datenübertragungskanal auf der Datenschiene vorsehen, der mit Amplitudenmodulierung arbeitet (gestrichelter Zusatz zu Figur 7).

**Patentansprüche**

1. Einrichtung zur Fernmessung der Temperatur oder einer anderen physikalische Größe an einer Mehrzahl von Meßstellen, mit einer zentralen Auswerteinheit (10), die über eine Signalschiene (12, 14) mit einer Vielzahl von Fühleinheiten (32–38) verbunden ist, wobei die Fühleinheiten (32–38) jeweils einen einer Meßstelle zugeordneten Fühler (38c, 50), einen Modulationskreis (50), der das Ausgangssignal des Fühlers in ein impulsabstandsmoduliertes Signal umsetzt, sowie einen für jede Fühleinheit unterschiedlich eingestellten Phasenmodulator (56, 60) für die abgegebenen Impulse enthalten, dadurch gekennzeichnet, daß mindestens ein weiterer Modulationskreis (58) der Fühleinheiten (32–38) zusätzlich die Breite und/oder die Amplitude der erzeugten Meßimpulse gemäß einem auf ihn gegebenen Steuersignal (62) moduliert.

2. Einrichtung nach Anspruch 1, dadurch gekennzeichnet, daß das Steuersignal (62) von einem voreingestellten Festwertspeicher bereitgestellt wird, dessen Speicherinhalt z.B. der Fühlerkennlinie oder einer Kenngröße der der Fühleinheit zugeordneten Meßstelle zugeordnet ist.

3. Einrichtung nach Anspruch 1, dadurch gekennzeichnet, daß das Steuersignal von einem auf eine zweite physikalische Größe ansprechenden Fühler (62) bereitgestellt wird, z.B. einem unter Abstand von einer Temperatur-Meßstelle angeordneten zweiten Temperaturfühler oder einem auf den Durchsatz von Reaktionsmedium durch einen die Meßstelle enthaltenden Reaktor ansprechenden Fühler (64).

4. Einrichtung nach einem der Ansprüche 1-3, dadurch gekennzeichnet, daß die Auswerteeinheit (10) zusätzlich zu einem Impulsabstands-Diskriminatorkreis (112-120) einen Impulsbreiten-Diskriminatorkreis (114-122) und/oder einen Amplituden-Diskriminatorkreis (142) aufweist.

5. Einrichtung nach Anspruch 4, gekennzeichnet durch einen Kombinationskreis (130), welcher jeweils nach Empfang der hinteren Flanke eines Meßimpulses ein dem Impulsabstand zugeordnetes digitales Signal und ein der Impulsbreite und/oder der Impulshöhe zugeordnetes digitales Signal zeichenmäßig zu einem Datenwort zusammensetzt.

6. Einrichtung nach Anspruch 4 oder 5, dadurch gekennzeichnet, daß der Impulsabstands-Diskriminator und der Impulsbreiten-Diskriminator einen gemeinsamen durch einen freilaufenden Frequenzgenerator (120) laufend hochgezählten Zähler (118), einen ersten Speicher (116), der bei Erhalt der vorderen Impulsflanke mit dem Stand des Zählers (118) eingelesen wird, einen zweiten Speicher (122), der bei Erhalt der hinteren Flanke eines Meßimpulses mit dem Stand des Zählers (118) eingelesen wird, und einen nach Erhalt der hinteren Flanke des Meßimpulses aktivierten Subtrahierkreis (124) aufweist, dessen Eingänge mit den Inhalten des ersten Speichers (116) und des zweiten Speichers (122) beaufschlagt sind.

7. Einrichtung nach einem der Ansprüche 1-6, dadurch gekennzeichnet, daß mehrere Unter-Signalschienen (26-30), in denen jeweils für sich allein genommen die Phasenmodulatoren (56) der angeschlossenen Fühleinheiten (32-38) unterschiedlich eingestellt sind, während in verschiedenen der Unter-Signalschienen gleich eingestellte Phasenmodulatoren (56) enthalten sein können, über adressierbare Schienenumschalter (18) an eine Haupt-Signalschiene (12-16) ankoppelbar oder von dieser trennbar sind, wobei die Adressierung der Schienenumschalter (18) durch Breitenmodulation oder Amplitudenmodulation von der Auswerteeinheit (10) abgegebener Steuerimpulse (42) erfolgt.

8. Einrichtung nach Anspruch 7, dadurch gekennzeichnet, daß sich die Modulation der Steuerimpulse (42) vom Modulationsgrad und/oder der Modulationsart her von der Modulation der Meßimpulse (46) unterscheidet.

9. Einrichtung nach einem der Ansprüche 1-8, dadurch gekennzeichnet, daß die von den Fühleinheiten (32-38) erzeugten Meßimpulse (46) Stromimpulse sind.

10. Einrichtung nach Anspruch 9 in Verbindung mit Anspruch 8, dadurch gekennzeichnet, daß die von der Auswerteeinheit (10) erzeugten Steuerimpulse (42) Spannungsimpulse sind.

11. Einrichtung nach einem der Ansprüche 1-10, dadurch gekennzeichnet, daß mindestens eine der Fühleinheiten (32-38) einen Temperaturfühler in Form eines auf Temperaturgang seiner Schwingungsfrequenz geschnittenen Schwingquarzes aufweist.

## Claims

1. Device for the remote measurement of temperature or another physical quantity at a plurality of measuring points, with a central analyser unit (10) which is connected by a signal bus (12, 14) to a plurality of sensing units (32–38), wherein the sensing units (32–38) each contain a sensor (38c, 50) associated with a measuring point, a modulation circuit (58) which converts the output signal of the sensor to a pulse spacing-modulated signal, and a phase modulator (56) for the transmitted pulses, which is set differently for each sensing unit, characterised in that at least one further modulation circuit (58) of the sensing units (32–38) additionally modulates the width and/or the amplitude of the measurement pulses generated, according to a control signal (62) delivered to it.

2. Device according to claim 1, characterised in that the control signal (62) is made available by a preset read-only memory, the memory contents of which are associated with e.g. the sensor characteristic or a parameter of the measuring point associated with the sensing unit.

3. Device according to claim 1, characterised in that the control signal is made available by a sensor (62) responding to a second physical quantity, e.g. a second temperature sensor arranged at a distance from a temperature measuring point or a sensor (64) responding to the throughput of reaction medium through a reactor containing the measuring point.

4. Device according to any of claims 1–3, characterised in that the analyser unit (10) comprises, in addition to a pulse spacing discriminator circuit (112–120), a pulse width discriminator circuit (114–122) and/or an amplitude discriminator circuit (142).

5. Device according to claim 4, characterised by a combination circuit (130) which after reception of the trailing edge of each measurement pulse combines a digital signal associated with the pulse spacing and a digital signal associated with the pulse width and/or the pulse height, with respect to characters to form a data item.

6. Device according to claim 4 or 5, characterised in that the pulse spacing discriminator and the pulse width discriminator comprise a common counter (118) which is continuously advanced by a free-running frequency generator (120), a first memory (116) into which the count of the counter (118) is input on reception of the leading pulse edge, a second memory (122) into which the count of the counter (118) is input on reception of the trailing edge of a measurement pulse, and a subtraction circuit (124) which is activated on reception of the trailing edge of the measurement pulse and the inputs of which admit the contents of the first memory (116) and the second memory (122).

7. Device according to any of claims 1–6, characterised in that several subsignal buses (26–28) in each of which independently the phase modulators (56) of the connected sensing units (32–38) are set differently, while various ones of the subsignal buses may contain identically set phase modulators (56), can be coupled or uncoupled by addressable bus switches (18) to or from a main signal bus (12–14), wherein addressing of the bus switches (18) takes place by width modulation or amplitude modulation by the analyser unit (10) of transmitted control pulses (42).

8. Device according to claim 7, characterised in that modulation of the control pulses (42) differs from modulation of the measurement pulses (46) in the degree of modulation and/or the type of modulation.

9. Device according to any of claims 1–8, characterised in that the measurement pulses (46) generated by the sensing units (32–38) are current pulses.

10. Device according to claim 9 in connection with claim 8, characterised in that the control pulses (42) generated by the analyser unit (10) are voltage pulses.

11. Device according to any of claims 1–10, characterised in that at least one of the sensing units (32–38) comprises a temperature sensor in the form of a quartz resonator cut to the temperature range of its frequency of oscillation.

## Revendications

1. Dispositif de mesure à distance de la température ou d'un autre grandeur physique sur une pluralité de points de mesure, avec une unité centrale de traitement (10), reliée par un bus de signaux (12, 14) à une pluralité d'unités de captage (32–38), où les unités de captage (32–38) comportent chacune un capteur (38c) affecté au point de mesure, un circuit de modulation (50) qui transforme le signal de sortie en un signal modulé en intervalle d'impulsion, ainsi qu'un modulateur de phase (56, 60) pour les impulsions fournies, réglé différemment pour chaque unité de captage, caractérisé en ce qu'au moins un autre circuit de modulation (58) des unités de captage (32–38) module en outre la largeur et/ou l'amplitude des impulsions de mesure produites conformément à un signal de commande (62) qui lui est injecté.

2. Dispositif selon la revendication 1, caractérisé en ce que le signal de commande (62) est fourni par une mémoire morte préprogrammée dont le contenu correspond par exemple à la caractéristique du capteur ou à une grandeur caractéristique du point de mesure correspondant au capteur.

3. Dispositif selon la revendication 1, caractérisé en ce que le signal de commande est fourni par un capteur (62) répondant à une seconde grandeur physique, par example un second capteur thermique disposé à une certaine distance du premier point de mesure ou un capteur (64) répondant au débit de substance réactive dans un réacteur contenant le point de mesure.

4. Dispositif sleon l'une des revendications 1 à 3, caractérisé en ce que l'unité de traitement (10) comprend en plus du circuit discriminateur des intervalles d'impulsions (112–120) un circuit discriminateur de largeur d'impulsions (114–122) et/ou un circuit discriminateur d'amplitude (142).

5. Dispositif sleon la revendication 4, caractérisé par un circuit combinatoire (130) qui, après réception du front descendant d'une impulsion de mesure réunit comme des caractères en un seul mot de données le signal numérique correspondant à l'intervalle des impulsions et le signal numérique correspondant à la largeur de l'impulsoin et/ou à la hauteur de l'impulsion.

6. Dispositif selon la revendication 4 ou 5, caractérisé en ce que le discriminateur d'intervalle d'impulsions et le discriminateur de largeur d'impulsion possèdent un compteur (118) commandé en permanence par un générateur de fréquence (120) fonctionnant en roue libre, un première mémoire (116) dans laquelle une opération de lecture fondée sur l'état du compteur (118) est faite à la réception du front avant de l'impulsion, une seconde mémoire (122) dans laquelle une opération de lecture fondée sur l'état du compteur (118) est faite à la réception du front arrière d'une impulsion de mesure, et un circuit soustracteur (124) qui est activé après réception du front arrière de l'impulsion de mesure et dont les entrées reçoivant le contenu de la première mémoire (116) et de la seconde mémoire (122).

7. Dispositif selon l'une des revendications 1 à 6, caractérisé en ce que plusieurs bus de données secondaires (26–28) dans lesquels à chaque fois les modulateurs de phase (56) des unités de captage raccordées (32–38) sont réglés différemment, tandis que l'on peut avoir dans plusieurs des bus de données secondaires des modulateurs de phase (56) réglés identiquement peuvent être raccordés par des commutateurs de bus adressables (18) au bus de données principal (12–14) ou encore déconnectés de celui-ci, l'adressage des commutateurs de bus (18) étant opéré par des impulsions de commande (42) fournies par l'unité de traitement (10) par modulation en largeur ou modulation en amplitude.

8. Dispositif selon la revendication 7, caractérisé en ce que la modulation des impulsions de commande (42) diffère de celle des impulsions de mesure (46) par le degré de modulation et/ou le type de modulation.

9. Dispositif selon l'une des revendications 1 à 8, caractérisé en ce que les impulsions de mesure fournies par les unités de captage (32–38) sont des impulsions de courant.

10. Dispositif selon la revendication 9 en liaison avec la revendication 8, caractérisé en ce que les impulsions de commande (42) produites par l'unité de traitement (10) sont des impulsions de tension.

11. Dispositif selon l'une des revendications 1 à 10, caractérisé en ce qu'au moins une des unités de captage (32–38) possède un capteur de température sous la forme d'un quartz coupé de manière à avoir une réponse en température de sa fréquence d'oscillation.

*Fig. 1*

*Fig. 2a*

*Fig. 2b*

$I$

$b_2$    $b_1$

46-1

$I_0$

34-1    38-1    34-1    38-1    34-1    38-1

32-1    36-1    32-1    36-1    32-1    36-1

_Fig. 3_

60    62

64

50

52    54

32-38

58

56    72

48

70

66

68

26    28

_Fig. 4_

Fig. 5

*Fig. 6*

*Fig. 7*

Fig. 8

Fig. 9